# EUROPEAN PATENT SPECIFICATION

(11) **EP 4 394 341 B1**
(45) Date of publication and mention of the grant of the patent: **03.12.2025**
(21) Application number: 22941301.8
(22) Date of filing: 09.06.2022
(51) Int. Cl.: G01L 5/24, G01L 1/24, G01L 1/25

(54) **BOLT SHEAR FORCE CIRCUMFERENTIAL DISTRIBUTION MEASUREMENT METHOD BASED ON ARRAY FILM ROTATION CALIBRATION**
VERFAHREN ZUR MESSUNG DER UMLAUFENDEN VERTEILUNG EINER BOLZENSCHERKRAFT AUF BASIS EINER ARRAY-FILMROTATIONSKALIBRIERUNG
PROCÉDÉ DE MESURE DE DISTRIBUTION CIRCONFÉRENTIELLE DE FORCE DE CISAILLEMENT DE BOULON FONDÉ SUR UN ÉTALONNAGE DE ROTATION DE FILM DE RÉSEAU

(30) Priority: 09.05.2022 CN 202210496826
(43) Date of publication of application: 03.07.2024
(73) Proprietor: Aerospace Precision Products Inc., Ltd, Tianjin 300300 (CN)
(72) Inventor: WANG, Chuan, Tianjin 300300 (CN); JIAO, Guangming, Tianjin 300300 (CN); LI, Wensheng, Tianjin 300300 (CN); CHENG, Quanshi, Tianjin 300300 (CN); XIA, Binhong, Tianjin 300300 (CN); ZHENG, Pengfei, Tianjin 300300 (CN); YANG, Baojian, Tianjin 300300 (CN); LI, Chongyuan, Tianjin 300300 (CN); YANG, Bing, Tianjin 300300 (CN); ZHANG, Jun, Tianjin 300300 (CN)
(74) Representative: JD&P Patent Attorneys Joanna Dargiewicz & Partners
(86) International application number: PCT/CN2022/097849
(87) International publication number: WO 2023/216353

(56) References cited:
- CN-A- 108 204 876
- CN-A- 112 179 553
- CN-A- 113 701 930
- CN-A- 113 701 930
- CN-A- 114 001 848
- CN-A- 114 001 848
- US-B1- 9 429 485

## Description

### TECHNICAL FIELD

The present disclosure belongs to the technical field of ultrasonic measurement on a bolt stress, and particularly relates to a method for measuring a circumferential distribution of a bolt shear force based on arrayed thin-film rotating calibration.

### BACKGROUND

Bolted connection is an important connection technology for large key equipment in the aerospace field. External vibration loads on a bolt connecting structure is generally categorized into four types: an axial tensile force, a radial shear force, an axial torque parallel to a bolt axis, and a radial bending moment perpendicular to the bolt axis. Compared with other three loads, a transverse dynamic load is more likely to make the bolt connecting structure loose.

Bolt stress measuring studies are carried out early at home and abroad, but most of the studies focus on measurement of an axial stress (a pretightening force). According to an acoustoelastic principle, a propagation velocity of an ultrasonic wave in a bolt is associated with a stress of the bolt. By observing propagation time of the ultrasonic wave in the bolt, the propagation velocity of the ultrasonic wave can be known. By shearing a functional relation between the propagation time of the ultrasonic wave and the axial stress of the bolt, and through a calibration test, correlation coefficients in the functional relation are obtained. By measuring the propagation time of the ultrasonic wave in the bolt, the stress of the bolt can be measured quantitatively, thereby determining a health status of the bolted connection. Existing patch-based ultrasonic stress detection has been applied for many years. However, a piezoelectric wafer falls off easily, because it is bonded on a bolt by using epoxy resin or using an adhesive. Since the thickness of the adhesive layer cannot be measured, a detection accuracy is greatly affected.

A method for measuring a pretightening force based on a permanent mounted transducer system (PMTS) is developed by the Germany. Specifically, a permanent mounted piezoelectric transducer (PET) is prepared on a bolt mainly. An ultrasonic signal is generated in the bolt with an inverse piezoelectric effect of the transducer. By calibrating a relation between time of flight (TOF) differences of different loads, different temperatures and different ultrasonic waves in the bolt, loads in the bolt are measured. This method is considered as a direct in-situ measurement method for the load of the bolt. In terms of shear force measurement, an in-depth advance or a technology combining the shear force measurement with a piezoelectric thin film remains unavailable.

The ultrasonic wave is used by the National Aeronautics and Space Administration (NASA) of the USA to measure a bending stress of a shear joint. Based on an ultrasonic beam tracking model of ultrasonic propagation, Koshit constructed an ultrasonic propagation path equation of a bolt structure in a bending state, and carried out simulated calculation on acoustic ranges and acoustic delays under different bending stresses. Theoretical studies and experimental results show that the acoustic delay of the ultrasonic wave is in a linear relation with the bending stress. For a region with a poor corresponding relation between a probe wafer and a reflector, an ultrasonic signal is distorted seriously.

Chinese Patent Application (Publication No. CN114001848A) discloses a method for measuring bolt shear force using ultrasonics, which comprises at least two ultrasonic transducers which are uniformly distributed and independent of each other at the head or tail of a bolt. The piezoelectric chip is used as the ultrasonic transducer, and is sticked to the flat end face of the head or tail of the bolt with bolt tightening glue. Alternatively, PVD (physical vapor deposition) sputtering process is adopted, a layer of dense piezoelectric material is prepared on the flat end face of the head or tail of the bolt as an ultrasonic transducer. The method in CN114001848A cannot achieve a more accurate measurement of the circumferential distribution of bolt shear force.

Chinese Patent Application (Publication No. CN 113701930A) discloses a high-strength bolt shear stress detection method based on ultrasonic transverse waves. The method consists of determining a relationship between the ultrasonic wave speed in the bolt and the level of shear stress in the bolt by using a calibration process. The method in CN113701930A can only be detected using ultrasonic transverse waves.

The methods in the prior art at least have the following technical problems:
(1) For the conventional ultrasonic method, a large error is caused in the stress detection due to a couplant. To bond the conventional piezoelectric wafer, the adhesive is highly demanded. The ultrasonic signal becomes scattered frequently. Moreover, the piezoelectric wafer is easy to wear and fall off.
(2) When the piezoelectric thin film is used for the stress detection, the shear force is applied to a circumferential direction of the fastener, and is not distributed uniformly. The conventional ultrasonic measurement method can only determine the shear force at a single point, and is unavailable for a non-uniform shear force distribution.
(3) During calibration, an overlap between the piezoelectric thin film and the maximum shear force can be controlled. However, in actual measurement, due to a randomness in a bolt screwing process, there is a random angular deflection between a direction of the maximum shear force and a direction of the piezoelectric thin film. Consequently, a calibration coefficient used in load measurement has a large deviation, and an accurate shear force measurement result cannot be obtained.

### SUMMARY OF PRESENT INVENTION

In view of this, an objective of the present disclosure is to provide a method for measuring a circumferential distribution of a bolt shear force based on arrayed thin-film rotating calibration, to accurately measure a shear force of a bolt fastener, as well as a to-be-measured device under a shear load, and to localize an acting direction, thereby achieving a more accurate measurement result.

To achieve the above objective, the present disclosure adopts the following technical solutions.

A method for measuring a circumferential distribution of a bolt shear force based on arrayed thin-film rotating calibration includes the following steps:
step S1: preparing N circumferentially arrayed ultrasonic thin-film transducers on a top of a standard bolt sample by physical vapor deposition (PVD), and sequentially numbering the arrayed ultrasonic thin-film transducers as Eᵢ (i=1,2...N) according to a clockwise direction;
step S2: fixing arrayed probes to the arrayed ultrasonic thin-film transducers in one-to-one correspondence, wherein the arrayed probes are electrically connected to an ultrasonic instrument;
step S3: fixedly connecting the standard bolt sample to a tensile fixture, connecting the tensile fixture to a stretcher, where a direction of a connection line between a centroid point of the arrayed ultrasonic thin-film transducer E₁ and a center of the standard bolt sample is identical to a loading direction of the stretcher, and recording ultrasonic TOF tb₀ of each arrayed ultrasonic thin-film transducer when a shear load is 0;
step S4: applying the shear load F=n*ΔF (n=1, 2, 3, 4, 5) to the standard bolt sample through the stretcher based on a gradient ΔF, recording corresponding ultrasonic TOF tbₙᵢ (n=1, 2, 3, 4, 5; i=1,2...N) of each arrayed ultrasonic thin-film transducer under each shear load, and subtracting tb₀ to obtain an ultrasonic TOF difference array Δtbₙᵢ (n=1, 2, 3, 4, 5; i=1,2...N);
step S5: performing linear fitting on the ultrasonic TOF difference array and the shear load to obtain a relational expression between the shear load and the ultrasonic TOF of each arrayed ultrasonic thin-film transducer: F=Aᵢ₀*Δtb+Bᵢ₀, i=1,2...N, where Δtb is an ultrasonic TOF difference, and Aᵢ₀ and Bᵢ₀ each are a constant coefficient;
step S6: sequentially rotating the standard bolt sample to an angle θ=m*Δθ over an initial angle based on a gradient Δθ, repeating steps S4-S5, and respectively calculating Aᵢₘ and Bᵢₘ at different angles, where m is a number of rotating times;
step S7: fitting the θ, the Aᵢₘ and the Bᵢₘ to obtain a relational expression Aᵢ=*f*ᵢ₁(θ), Bi=*f*ᵢ₂(θ);
step S8: preparing N circumferentially arrayed ultrasonic thin-film transducers on a top of a to-be-measured bolt with the PVD, fixing the arrayed probes to the arrayed ultrasonic thin-film transducers in one-to-one correspondence, where the arrayed probes is electrically connected to the ultrasonic instrument, fixedly connecting the to-be-measured bolt to the tensile fixture, connecting the tensile fixture to the stretcher, and measuring ultrasonic TOF tb_{measurement 0} of each arrayed ultrasonic thin-film transducer when a shear load is 0, where the maximum ultrasonic TOF corresponding to the arrayed ultrasonic thin-film transducer is E_{measurement 1}, and other arrayed ultrasonic thin-film transducers are sequentially numbered as E_{measurement 2}, Eₘₑₐₛᵤᵣₑₘₑₙₜ₃...E_{measurement N} according to a clockwise direction;
step S9: measuring an included angle θₘₑₐₛᵤᵣₑₘₑₙₜ between a direction of a connection line for a centerpoint of the ultrasonic thin-film transducer E_{measurement 1} and a centerpoint of the to-be-measured bolt and a direction of the shear load, and substituting θₘₑₐₛᵤᵣₑₘₑₙₜ into the relational expression in the step S7 to obtain corresponding coefficients A_{measurement i} and B_{measurement i} of each arrayed ultrasonic thin-film transducer, i=1,2...N; and
step S10: applying the shear load Fₘₑₐₛᵤᵣₑₘₑₙₜ to the to-be-measured bolt through the stretcher, measuring ultrasonic TOF tb_{measurement i} of each arrayed ultrasonic thin-film transducer in response to the shear load Fₘₑₐₛᵤᵣₑₘₑₙₜ, subtracting tb_{measurement 0} to obtain an ultrasonic TOF difference array Δtb_{measurement i}, i=1,2...N, and obtaining a circumferential shear force distribution of the to-be-measured bolt through an equation F_{measurement i}=A_{measurement i}*Δtb_{measurement i}+B_{measurement i}.

Further, the tensile fixture includes bases, mounting plates, and a tension rod; two opposite bases are respectively provided on the mounting plates; a through hole for fixing the bolt is formed in the mounting plate; the tension rod is provided between two mounting plates; and the tension rod includes one end sleeved on the bolt, and the other end connected to the stretcher.

Further, a number of the arrayed ultrasonic thin-film transducers is greater than 8.

Further, the arrayed ultrasonic thin-film transducer includes a protective layer, a piezoelectric layer, and an electrode layer; and preferably, the arrayed ultrasonic thin-film transducer includes one of a circular shape, a square shape or a fan shape.

Further, the standard bolt sample is an annealed zero-stress bolt.

Further, a maximum shear load applied by the stretcher to the standard bolt sample and the to-be-measured bolt is less than a shear strength of each of the standard bolt sample and the to-be-measured bolt.

The method for measuring a circumferential distribution of a bolt shear force based on arrayed thin-film rotating calibration provided by the present disclosure has the following advantages over the prior art:
(1) The method provided by the present disclosure does not use the original conventional ultrasonic stress detection method, but prepares a piezoelectric thin film and an electrode array with acoustoelectric transformation by PVD. Through central transmission and array reception of an ultrasonic signal, the present disclosure realizes high-accuracy measurement on a shear stress and localizes a load distribution, prevents a random angular deflection between a direction of the maximum shear force and a direction of the piezoelectric thin film, and achieves a more accurate measurement result.
(2) The method provided by the present disclosure prepares a PZT coating on a surface of a fastener, prepares arrayed electrodes, performs a simulated calibration experiment on an actual working environment, and records an acoustic time signal acquired by each electrode under different loads and different acting angles, thereby forming a database. Therefore, the present disclosure can monitor a change of the shear force and a distribution of the load in real time in actual working, and has a strong practicability.
(3) The method provided by the present disclosure can be applied to high-accuracy measurement on the shear force of the bolt fastener, and realizes normal stable work under strict conditions such as a high-stress and high-temperature environment. For example, for an aircraft engine fastening bolt, a boiler container fastening bolt, and the like, the present disclosure realizes high-accuracy measurement and distribution localization on the shear force of the fastener.

### BRIEF DESCRIPTION OF THE DRAWINGS

The accompanying drawings which constitute a part of the description of the present disclosure are intended to provide further understanding of the present disclosure. The exemplary embodiments of the present disclosure and descriptions thereof are intended to be illustrative of the present disclosure and do not constitute an undue limitation of the present disclosure. In the accompanying drawings:
FIG. 1 is a schematic structural view illustrating a distribution of arrayed ultrasonic thin-film transducers on a top of a bolt according to an embodiment of the present disclosure;
FIG. 2 is a schematic structural view of a tensile fixture according to an embodiment of the present disclosure;
FIG. 3 illustrates a curve between ultrasonic TOF measured by a transducer E1 and a shear load according to an embodiment of the present disclosure;
FIG. 4 illustrates a fitting result for calibration coefficients on an ultrasonic TOF-angle curve in a range from -180°to 180° according to an embodiment of the present disclosure; and
FIG. 5 illustrates a circumferential shear force distribution of a to-be-measured bolt according to an embodiment of the present disclosure.

Reference numerals:
1: base, 2: mounting plate, 3: tension rod, 4: bolt, and 5: arrayed ultrasonic thin-film transducer.

### DETAILED DESCRIPTION OF THE EMBODIMENTS

Unless otherwise defined, the technical and scientific terms used in the following examples have the same meanings as commonly understood by those skilled in the art to which the present disclosure belongs. Unless otherwise specified, in the following examples, the test reagents used are all conventional biochemical reagents, and the test methods are all conventional methods.

The present disclosure will be described in detail below with reference to the accompanying drawings and the examples.

The present disclosure provides a method for measuring a circumferential distribution of a bolt shear force based on arrayed thin-film rotating calibration, including the following steps:

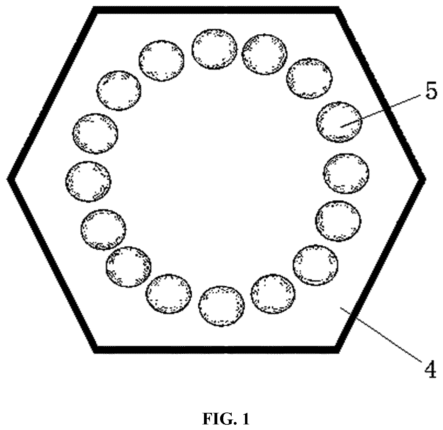

In S1, 16 circumferentially arrayed ultrasonic thin-film transducers are prepared on a top of a standard bolt sample by PVD. A PZT coating and a protective layer are prepared by the PVD. An electrode is prepared on a surface of the coating of the transducer. The electrode is made of a material which has a good fit and a corrosion resistance, and is not easy to fall off, such as silver. Therefore, the bolt with the transducers is obtained. The bolt used in the embodiment is a nickel-based alloy torque bolt used at a high temperature. A fan-shaped array including the 16 arrayed ultrasonic thin-film transducers in a circumferential direction is machined through a method such as direct PVD or laser cutting. The fan-shaped array is schematically as shown in FIG. 1. The arrayed ultrasonic thin-film transducers in the circumferential direction are respectively numbered as E₁, E₂, E₃, ...E₁₆ according to a clockwise sequence.

In S2, according to an arrayed arrangement and a number of the arrayed ultrasonic thin-film transducers on the top of the standard bolt sample, arrayed probes for signal transmission between an ultrasonic instrument and the arrayed ultrasonic thin-film transducers are manufactured. The probes are fixed to centers of the arrayed ultrasonic thin-film transducers in one-to-one correspondence.

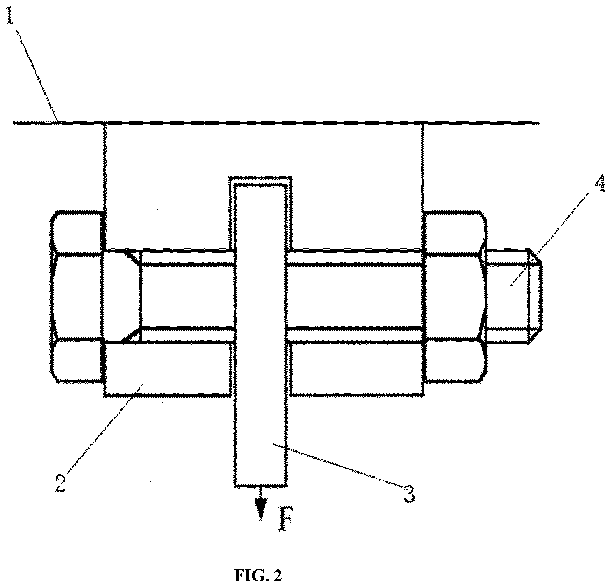

In S3, according to a shear force on the standard bolt sample in an actual working environment, a tensile fixture is designed as shown in FIG. 2, and is fixed by bases. The standard bolt sample in the embodiment suffers from a combined action of three sandwich layers. A tension rod in a middle of the three sandwich layers is used to apply a tensile force. The bolt is fixed by two mounting plates at two sides. The whole bolt bears the shear force. That is, simulation on the actual working environment is realized.

In S4, the standard bolt sample and the tensile fixture are fixed on a standard stretcher. A direction of a connection line between a centroid point of the arrayed ultrasonic thin-film transducer E₁ and a centerpoint of the bolt is identical to a loading direction of the stretcher, namely an included angle is 0. Ultrasonic TOF tb₀ of each arrayed ultrasonic thin-film transducer when a shear load is 0 is recorded.

In S5, different shear loads n*2000 N (n=1, 2, 3, 4, 5) are set with the stretcher at a gradient 5000 N, and applied. A maximum shear load is 25 kN.

In S6, corresponding ultrasonic TOF tbₙᵢ (n=1, 2, 3, 4, 5; i=1,2,...16) of each arrayed ultrasonic thin-film transducer under each load is recorded, and subtracted by the time tb₀ under a zero stress to obtain a TOF array Δtbₙᵢ (n=1, 2, 3, 4, 5; i=1, 2, ...16).

In S7, linear fitting is performed on corresponding load data and TOF data of each arrayed ultrasonic thin-film transducer to obtain corresponding stress calibration coefficients of the arrayed ultrasonic thin-film transducer, labeled as Aᵢ₀ and B ᵢ₀.

In S8, the standard bolt sample is rotated by 5°, namely the included angle between the direction of the connection line between the centroid point of the arrayed ultrasonic thin-film transducer E₁ and the centerpoint of the bolt and the loading direction of the stretcher is 5°. Steps S5-S7 are repeated to obtain stress calibration coefficients Aᵢ₁ and Bᵢ₁ corresponding to θ=5°.

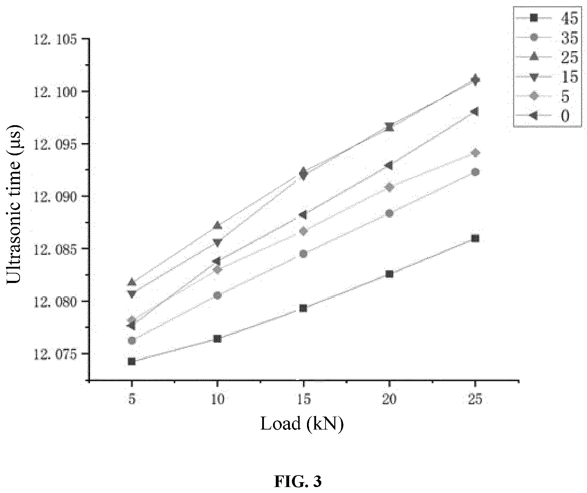

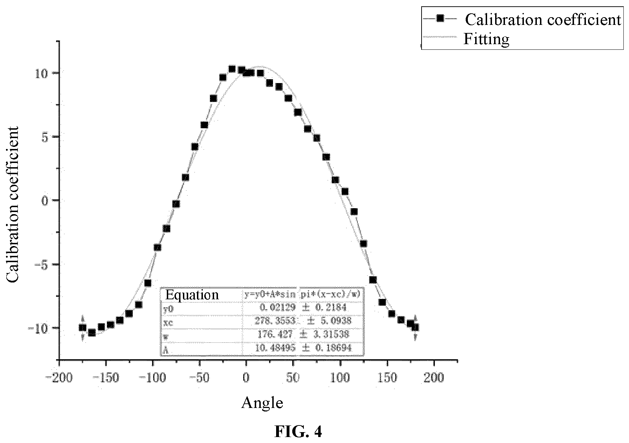

In S9, the standard bolt sample is rotated again by 35 times at Δθ=10°. An angle and calibration coefficient array is recorded. Fitting is performed to obtain a function between an angle and a stress calibration coefficient, as shown in FIG. 3 and FIG. 4.

In S10, a shear force of an in-service bolt is measured actually. Ultrasonic TOF of 16 arrayed ultrasonic thin-film transducers is parallel measured with a multi-channel ultrasonic instrument. The maximum TOF corresponds to the arrayed ultrasonic thin-film transducer E₁. Other arrayed ultrasonic thin-film transducers are numbered according to a clockwise direction.

In S11, an included angle θ between a direction of a connection line for a centroid point of the arrayed ultrasonic thin-film transducer E₁ and a centerpoint of the bolt and a direction of the shear load is measured. The included angle is substituted into the fitted equation in S9 to calculate corresponding calibration coefficients A_{measurement i}(i= 1, 2, ...16) and B_{measurement i}(i=1, 2, ...16) of the arrayed ultrasonic thin-film transducer.

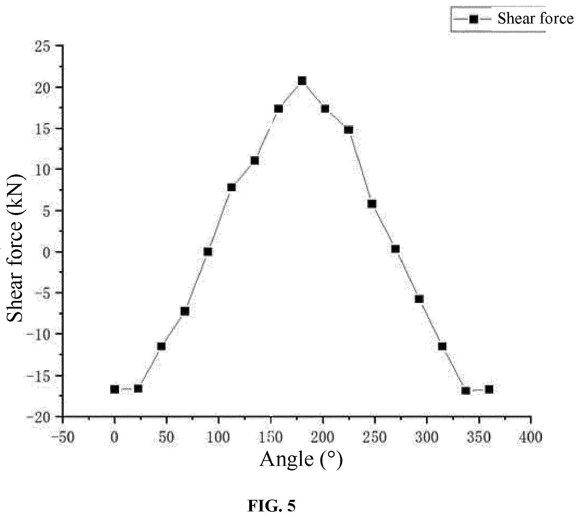

In S12, ultrasonic TOF of N arrayed ultrasonic thin-film transducers of the in-service bolt are parallel measured and recorded in response to a shear load Fₘₑₐₛᵤᵣₑₘₑₙₜ, an array t_{measuremnent i}(i=1, 2, ...16) is recorded, and TOF tb₀ of the in-service bolt in a zero-stress state is subtracted to obtain ultrasonic TOF arrays Δ t_{measurement i}(i=1,2,...16) of all arrayed ultrasonic thin-film transducers. A circumferential shear force distribution is calculated with the equation, as shown in FIG. 5.

## Claims

1. A method for measuring a circumferential distribution of a bolt shear force based on arrayed thin-film rotating calibration, comprising the following steps:
step S1: preparing N circumferentially arrayed ultrasonic thin-film transducers on a top of a standard bolt sample by physical vapor deposition (PVD), and sequentially numbering the arrayed ultrasonic thin-film transducers as Eᵢ (i=1,2...N) according to a clockwise direction;
step S2: fixing arrayed probes to the arrayed ultrasonic thin-film transducers in one-to-one correspondence, wherein the arrayed probes are electrically connected to an ultrasonic instrument;
step S3: fixedly connecting the standard bolt sample to a tensile fixture, connecting the tensile fixture to a stretcher, wherein a direction of a connection line between a centroid point of the arrayed ultrasonic thin-film transducer E₁ and a center of the standard bolt sample is identical to a loading direction of the stretcher, and recording ultrasonic tight of flight (TOF) tb₀ of each arrayed ultrasonic thin-film transducer when a shear load is 0;
step S4: applying shear loads F=n*ΔF (n=1, 2, 3, 4, 5) to the standard bolt sample through the stretcher based on a gradient ΔF, recording corresponding ultrasonic TOF tbₙᵢ (n=1, 2, 3, 4, 5; i=1,2...N) of each arrayed ultrasonic thin-film transducer under each shear load, and subtracting tb₀ to obtain an ultrasonic TOF difference array Δtbₙᵢ (n=1, 2, 3, 4, 5; i=1,2...N);
step S5: performing linear fitting on the ultrasonic TOF difference array and the shear loads to obtain a relational expression between the shear loads and the ultrasonic TOF of each arrayed ultrasonic thin-film transducer: F=Aᵢ₀*Δtb+Bᵢ₀, i=1,2...N, wherein Δtb is an ultrasonic TOF difference, and Aᵢ₀ and Bᵢ₀ each are a constant coefficient;
step S6: sequentially rotating the standard bolt sample to an angle θ=m*Δθ over an initial angle based on a gradient Δθ, repeating steps S4-S5, and respectively calculating Aᵢₘ and Bᵢₘ at different angles, wherein m is a number of rotating times;
step S7: fitting the θ, the Aᵢₘ and the Bᵢₘ to obtain a relational expression Aᵢ=*f*ᵢ₁(θ), Bi=_{f}*i2*(θ);
step S8: preparing N circumferentially arrayed ultrasonic thin-film transducers (5) on a top of a to-be-measured bolt (4) with the PVD, fixing the arrayed probes to the arrayed ultrasonic thin-film transducers in one-to-one correspondence, wherein the arrayed probes are electrically connected to the ultrasonic instrument, fixedly connecting the to-be-measured bolt to the tensile fixture, connecting the tensile fixture to the stretcher, and measuring ultrasonic TOF tb_{measurement 0} of each arrayed ultrasonic thin-film transducer when a shear load is 0, wherein the maximum ultrasonic TOF corresponding to the arrayed ultrasonic thin-film transducer is E_{measurement 1}, and other arrayed ultrasonic thin-film transducers are sequentially numbered as E_{measurement 2}, E_{measurement 3}...E_{measurement N} according to a clockwise direction;
step S9: measuring an included angle θₘₑₐₛᵤᵣₑₘₑₙₜ between a direction of a connection line for a centerpoint of the ultrasonic thin-film transducer E_{measurement 1} and a centerpoint of the to-be-measured bolt and a direction of the shear load, and substituting θₘₑₐₛᵤᵣₑₘₑₙₜ into the relational expression in the step S7 to obtain corresponding coefficients A_{measurement i} and B_{measurement i} of each arrayed ultrasonic thin-film transducer, i=1,2...N; and
step S10: applying the shear load Fₘₑₐₛᵤᵣₑₘₑₙₜ to the to-be-measured bolt through the stretcher, measuring ultrasonic TOF tb_{measurement i} of each arrayed ultrasonic thin-film transducer in response to the shear load Fₘₑₐₛᵤᵣₑₘₑₙₜ, subtracting tb_{measurement 0} to obtain an ultrasonic TOF difference array Δtb_{measurement i}, i=1,2...N, and obtaining a circumferential shear force distribution of the to-be-measured bolt through an equation F_{measurement i}=A_{measurement i}*Δtb_{measurement i}+B_{measurement i}.

2. The method according to claim 1, wherein the tensile fixture comprises a base (1), two mounting plates (2), and a tension rod (3); the two mounting plates are oppositely provided on the base; a through hole for fixing the bolt is formed in each of the mounting plates; the tension rod is provided between the two mounting plates; and the tension rod comprises one end sleeved on the bolt, and the other end connected to the stretcher.

3. The method according to claim 1, wherein a number of the arrayed ultrasonic thin-film transducers N is greater than 8.

4. The method according to claim 1, wherein the arrayed ultrasonic thin-film transducer comprises a protective layer, a piezoelectric layer, and an electrode layer; and preferably, the arrayed ultrasonic thin-film transducer comprises one of a circular shape, a square shape or a fan shape.

5. The method according to claim 1, wherein the standard bolt sample is an annealed zero-stress bolt.

6. The method according to claim 1, wherein a maximum shear load applied by the stretcher to the standard bolt sample and the to-be-measured bolt is less than a shear strength of each of the standard bolt sample and the to-be-measured bolt.

## Patentansprüche

1. Verfahren zum Messen einer Umfangsverteilung einer Bolzenscherkraft auf der Grundlage einer angeordneten Dünnschicht-Rotationskalibrierung, das die folgenden Schritte umfasst:
Schritt S1: Vorbereiten von N in Umfangsrichtung angeordneten Ultraschall-Dünnschichtwandlern auf einer Oberseite einer Standardbolzenprobe durch physikalische Gasphasenabscheidung (PVD) und sequentielles Nummerieren der angeordneten Ultraschall-Dünnschichtwandler als Eᵢ (i=1,2...N) gemäß einer Uhrzeigerrichtung;
Schritt S2: Befestigen von angeordneten Sonden an den angeordneten Ultraschall-Dünnschichtwandlern in einer Eins-zu-Eins-Entsprechung, wobei die angeordneten Sonden elektrisch mit einem Ultraschallgerät verbunden sind;
Schritt S3: Festes Verbinden der Standardbolzenprobe mit einer Zugvorrichtung, Verbinden der Zugvorrichtung mit einer Streckvorrichtung, wobei die Richtung einer Verbindungslinie zwischen einem Schwerpunkt des angeordneten Ultraschall-Dünnschichtwandlers Ei und einer Mitte der Standardbolzenprobe identisch mit einer Belastungsrichtung der Streckvorrichtung ist, und Aufzeichnen der Ultraschall-Laufzeit tb₀ jedes angeordneten Ultraschall-Dünnschichtwandlers, wenn die Scherkraft 0 beträgt;
Schritt S4: Aufbringen von Scherkräften F=n*ΔF (n=1,2,3,4,5) auf die Standardbolzenprobe über die Streckvorrichtung basierend auf einem Gradienten ΔF, Aufzeichnen der entsprechenden Ultraschall-Laufzeit tbₙᵢ (n=1, 2, 3, 4, 5; i=1,2... N) jedes angeordneten Ultraschall-Dünnschichtwandlers unter jeder Scherkraft und Subtrahieren von tb₀, um ein Ultraschall-Laufzeit-Differenzarray Δtbₙᵢ (n=1, 2, 3, 4, 5; i=1,2...N) zu erhalten;
Schritt S5: Durchführen einer linearen Anpassung an das Ultraschall-Laufzeit-Differenzarray und die Scherkräfte, um einen relationalen Ausdruck zwischen den Scherkräften und der Ultraschall- Laufzeit jedes angeordneten Ultraschall-Dünnschichtwandlers zu erhalten: F=Aᵢ₀*Δtb+Bᵢ₀, i=1,2...N, wobei Δtb eine Ultraschall-Laufzeit-Differenz ist und Aᵢ₀ und Bᵢ₀ jeweils ein konstanter Koeffizient sind;
Schritt S6: sequentielles Drehen der Standardbolzenprobe um einen Winkel θ=m*Δθ über einen Anfangswinkel basierend auf einem Gradienten Δθ, Wiederholen der Schritte S4-S5 und jeweiliges Berechnen von Aᵢₘ und Bᵢₘ bei verschiedenen Winkeln, wobei m eine Anzahl von Drehungen ist;
Schritt S7: Anpassen von 0, Aᵢₘ und Bᵢₘ, um einen relationalen Ausdruck Aᵢ=*f*ᵢ₁ (θ), Bᵢ=*f*ᵢ₂ (θ) zu erhalten;
Schritt S8: Vorbereiten von N in Umfangsrichtung angeordneten Ultraschall-Dünnschichtwandlern (5) auf einer Oberseite eines zu messenden Bolzens (4) mit dem PVD, Befestigen der angeordneten Sonden an den angeordneten Ultraschall-Dünnschichtwandlern in einer Eins-zu-Eins-Entsprechung, wobei die angeordneten Sonden elektrisch mit dem Ultraschallgerät verbunden sind, festes Verbinden des zu messenden Bolzens mit der Zugvorrichtung, Verbinden der Zugvorrichtung mit der Streckvorrichtung, und Messen der Ultraschall-Laufzeit tb_{Messung 0} jedes angeordneten Ultraschall-Dünnschichtwandlers, wenn eine Scherkraft 0 beträgt, wobei die maximale Ultraschall-Laufzeit, die dem angeordneten Ultraschall-Dünnschichtwandler entspricht, E_{Messung 1} ist und andere angeordnete Ultraschall-Dünnschichtwandler sequenziell als E_{Messung 2}, E_{Messung 3}...E_{Messung N} entsprechend der Uhrzeigerrichtung nummeriert werden;
Schritt S9: Messen eines eingeschlossenen Winkels θ_{Messung 1} zwischen einer Richtung einer Verbindungslinie für einen Mittelpunkt des Ultraschall-Dünnschichtwandlers E_{Messung 1} und einem Mittelpunkt des zu messenden Bolzens und einer Richtung der Scherkraft, und Einsetzen von θ_{Messung} in den relationalen Ausdruck in Schritt S7, um die entsprechenden Koeffizienten A_{Messung i} and B_{Messung i} jedes angeordneten Ultraschall-Dünnschichtwandlers zu erhalten, i=1,2... N; und
Schritt S10: Aufbringen der Scherkraft F_{messung} auf den zu messenden Bolzen durch die Streckvorrichtung, Messen der Ultraschall-Laufzeit tb_{Messung} i jedes angeordneten Ultraschall-Dünnschichtwandlers als Reaktion auf die Scherkraft F_{messung}, Subtrahieren von tb_{messung 0}, um ein Ultraschall-Laufzeit-Differenzarray Δtb_{messung i}, i=1,2.. .N zu erhalten, und Erhalten einer Umfangsscherkraftverteilung des zu messenden Bolzens durch eine Gleichung F_{Messung i}=A_{Messung i}*Δtb_{Messung i}+B_{Messung i}.

2. Verfahren nach Anspruch 1, wobei die Zugvorrichtung eine Basis (1), zwei Befestigungsplatten (2) und eine Zugstange (3) umfasst; die beiden Befestigungsplatten gegenüberliegend auf der Basis angeordnet sind; in jeder der Befestigungsplatten ein Durchgangsloch zum Befestigen des Bolzens ausgebildet ist; die Zugstange zwischen den beiden Befestigungsplatten angeordnet ist; und die Zugstange ein Ende aufweist, das auf den Bolzen aufgesteckt ist, und ein anderes Ende, das mit der Streckvorrichtung verbunden ist.

3. Verfahren nach Anspruch 1, wobei die Anzahl der angeordneten Ultraschall-Dünnschichtwandler N größer als 8 ist.

4. Verfahren nach Anspruch 1, wobei der angeordnete Ultraschall-Dünnschichtwandler eine Schutzschicht, eine piezoelektrische Schicht und eine Elektrodenschicht umfasst; und wobei der angeordnete Ultraschall-Dünnschichtwandler vorzugsweise eine kreisförmige, eine quadratische oder eine fächerförmige Gestalt aufweist.

5. Verfahren nach Anspruch 1, wobei die Standardbolzenprobe ein geglühter Bolzen ohne Spannung ist.

6. Verfahren nach Anspruch 1, wobei eine maximale Scherkraft, die von der Streckvorrichtung auf die Standardbolzenprobe und den zu messenden Bolzen ausgeübt wird, geringer ist als die Scherfestigkeit der Standardbolzenprobe und des zu messenden Bolzens.

## Revendications

1. Procédé de mesure de la distribution circonférentielle de la force de cisaillement d'un boulon, basé sur un calibrage de la rotation du film matriciel, il est **caractérisé en ce qu'**il comprend les étapes suivantes :
étape S1: préparer capteurs à film mince ultrasoniques matriciels avec N éléments matriciels disposés circonférentiellement sur la surface supérieure d'un échantillon de boulon standard par dépôt physique en phase vapeur, et numéroter séquentiellement les capteurs à film mince ultrasoniques matriciels comme Eᵢ (i=1, 2...N) dans le sens des aiguilles d'une montre
étape S2: fixer des sondes matriciels aux capteurs à film mince ultrasoniques matriciels en correspondance biunivoque, connecter électriquement les sondes matriciels à un instrument ultrasonique;
étape S3: fixer solidement le échantillon de boulon standard à un dispositif de traction, puis connecter ce dernier à une machine de traction, où la direction de la ligne reliant le centre de gravité du capteur à film mince ultrasonique matriciel numéroté comme E₁ et le centre du échantillon de boulon standard correspond à la direction de charge de la machine de traction, et enregistrer le temps de vol des ultrasons tb₀ de chaque capteur à film mince ultrasonique matriciel lorsque la charge de cisaillement est 0;
étape S4: appliquer une charge de cisaillement F = n*ΔF (n =1, 2, 3, 4, 5 ) au échantillon de boulon standard à l'aide de la machine de traction avec un gradient de charge de cisaillement de ΔF, enregistrer séquentiellement le temps de vol des ultrasons tbₙᵢ (n = 1, 2, 3, 4, 5; i = 1, 2...N) correspondant à chaque capteur à film mince ultrasonique sous chaque charge de cisaillement, et soustraire tb₀ pour obtenir un réseau de différences de temps de vol des ultrasons Δtbₙᵢ (n = 1, 2, 3, 4, 5 ; i = 1, 2...N);
étape S5: effectuer un ajustement linéaire sur le réseau de différence de temps de vol des ultrasons et les charges de cisaillement pour obtenir une expression relationnelle entre les charges de cisaillement de chaque capteur à film mince ultrasonique matriciel et les temps de vol des ultrasons: F=Aᵢ₀*Δtb+Bᵢ₀, i = 1, 2 ... N , Δtb est la différence de temps de vol des ultrasons, Aᵢ₀ et Bᵢ₀ sont des coefficients constants;
étape S6: faire rotater le échantillon de boulon standard séquentiellement avec un gradient de Δθ jusqu'à ce que l'angle soit θ=m*Δθ par rapport à l'angle initial, répéter les étapes S4 à S5 et calculer Aᵢₘ et Bᵢₘ à différents angles, où m est le nombre de rotations;
étape S7: obtenir une expression relationnelle en ajustant θ, Aᵢₘ et Bᵢₘ: Aᵢ = *fᵢ₁* (θ), Bᵢ *=fᵢ₂* (*θ*);
étape S8: préparer capteurs à film mince ultrasoniques matriciels (5) with N éléments matriciels disposés circonférentiellement sur la surface supérieure du boulon à measurer (4) par dépôt physique en phase vapeur, fixer les sondes matriciels en correspondance biunivoque avec les capteurs à film mince ultrasoniques matriciels, connecter électriquement les sondes à l'instrument ultrasonique, fixer solidement le boulon à measurer au dispositif de traction, ensuite connecter ce dernier à la machine de traction, mesurer le temps de vol des ultrasons tb_{mesure 0} pour chaque capteur à film mince ultrasonique matriciel lorsque la charge de cisaillement est 0, où le capteur à film mince ultrasonique matriciel correspondant au temps de vol des ultrasons maximal est numéroté comme E_{mesure 1}, et les autres capteur à film mince ultrasoniques matriciels sont numérotés séquentiellement comme E_{mesure 2}, E_{mesure 3} ... E_{mesure N} dans le sens des aiguilles d'une montre;
étape S9: mesurer l'angle θₘₑₐₛᵤᵣₑ entre la direction de la ligne reliant le capteur à film mince ultrasonique numéroté comme E _{mesure 1} et le centre du boulon à mesurer et la direction de la charge de cisaillement, introduire θₘₑₛᵤᵣₑ dans la l'expression relationnelle obtenue à l'étape S7 pour séparément obtenir les coefficients A_{mesure i} et B_{mesure i} correspondant à chaque capteur à film mince ultrasonique maximal, où i = 1, 2, ... N;
étape S10: appliquer une charge de cisaillement Fₘₑₐₛᵤᵣₑ au boulon à measurer à l'aide de la machine de traction, mesurer le temps de vol des ultrasons tb_{measure i} de chaque capteur à film mince ultrasonique matriciel lorsque la charge de cisaillement est Fₘₑₐₛᵤᵣₑ, et soustrayer tb_{measure 0} pour obtenir une réseau de différences de temps de vol des ultrasons Δtb_{measure i}, où i = 1, 2 ... N; et obtenir la distribution de la force de cisaillement dans la direction circonférentielle du boulon à measurer à l'aide de la formule F_{measure i} = A_{measure i} * Δtb_{measure i} + B_{measure i}.

2. Le procédé selon la revendication 1, il est **caractérisé en ce que**: le dispositif de traction comprend une base (1), une plaque de montage (2) et une tige de traction (3), deux bases sont disposées l'une par rapport à l'autre sur la plaque de montage; la plaque de montage est pourvue d'un trou traversant pour la fixation du boulon; la tige de traction est disposée entre les deux plaques de montage; une extrémité de la tige de traction est manchonnée sur le boulon et l'autre extrémité est reliée à la machine de traction.

3. Le procédé selon la revendication 1, it est **caractérisé en ce que**: le nombre de éléments matriciels N du capteur à film mince ultrasonique matriciel est supérieur à 8.

4. Le procédé selon la revendication 1, it est **caractérisé en ce que**: le capteur à film mince ultrasonique matriciel comprend une couche protectrice, une couche piézoélectrique et une couche d'électrode; de préférence, la forme du capteur à film mince ultrasonique matriciel est circulaire, carrée ou en éventail.

5. Le procédé selon la revendication 1, it est **caractérisé en ce que**: le échantillon de boulon standard est un boulon à contrainte nulle après recuit.

6. Le procédé selon la revendication 1, it est **caractérisé en ce que**: la charge de cisaillement maximale appliquée par la machine de traction au échantillon de boulon standard et au boulon à measurer est inférieure à la résistance au cisaillement du échantillon de boulon standard et du boulon à measurer.
